## Europäisches Patentamt
## European Patent Office
## Office européen des brevets

(11) Numéro de publication: **0 081 466**
**B1**

(12) **FASCICULE DE BREVET EUROPEEN**

(45) Date de publication du fascicule du brevet: **29.01.86**

(21) Numéro de dépôt: **82810525.4**

(22) Date de dépôt: **03.12.82**

(51) Int. Cl.⁴: **B 26 D 1/28** // A47J43/25

(54) **Appareil à râcler le fromage.**

(30) Priorité: **04.12.81 CH 7757/81**
**23.12.81 CH 7757/81**

(43) Date de publication de la demande:
**15.06.83 Bulletin 83/24**

(45) Mention de la délivrance du brevet:
**29.01.86 Bulletin 86/05**

(84) Etats contractants désignés:
**AT BE CH DE FR IT LI NL**

(56) Documents cités:
**BE-A- 784 302**
**FR-A-1 554 003**
**US-A-2 483 472**
**US-A-2 501 687**
**US-A-3 831 867**
**US-A-4 002 298**

(73) Titulaire: **Crevoisier, Nicolas**
**c/o Metafil N. Crevoisier**
**CH-2718 Lajoux/JU (CH)**

(72) Inventeur: **Crevoisier, Nicolas**
**c/o Metafil N. Crevoisier**
**CH-2718 Lajoux/JU (CH)**

(74) Mandataire: **Dubois, Jean René et al**
**Bovard AG Patentanwälte VSP Optingenstrasse 16**
**CH-3000 Bern 25 (CH)**

Courier Press, Leamington Spa, England.

**Description**

Pour que certains formages, notamment celui dénommé "Tête de Moine", fabriqué depuis le XVIIème siècle dans la Courtine de Bellelay, conservent toute leur saveur, il est indispensable de les râcler au moyen d'un couteau. Cette opération nécessite une certaine pratique que n'ont pas forcément toutes les personnes qui consomment un tel fromage. La présente invention vise à permettre à tout un chacun de râcler facilement un fromage de ce genre, notamment "la Tête de Moine".

On connaît déjà de nombreux appareils permettant de détacher, de façon commode, des éléments en forme de lamelles, d'une pièce de denrée alimentaire. Ainsi, le brevet français FR—A—1.554.003 décrit un dispositif à manivelle qui permet de découper en tranches ou couper des fruits et des légumes, spécialement des oignons. Mais l'élément principal du dispositif de coupe de cet appareil est un disque hélicoïdal et lorsque ce disque tourne autour de son axe par rapport à un objet à couper, la lame du couteau est orientée selon un plan très faiblement incliné par rapport au plan de support de l'objet, ce dernier plan étant perpendiculaire à l'axe de rotation.

Jusqu'à maintenant il n'était donc pas connu d'agencer un appareil à couteau rotatif de manière que la lame du couteau exerce une action de râclage sur la surface de la pièce à découper. Or, on s'est aperçu qu'en exerçant une telle action de râclage par un mouvement relatif de rotation, sur une surface plane d'une pièce de fromage "Tête de Moine", il s'en détache de très fines lamelles en forme de copeaux, qui s'enroulent sur elles-mêmes et présentent pour les amateurs un attrait gustatif encore supérieur à celui que présentaient les copeaux râclés au moyen du couteau à main utilisé jusqu'ici.

La présente invention a donc pour premier objet un appareil pour détacher des lamelles d'une pièce de denrée alimentaire, comprenant un plateau de support pour la dite pièce, un couteau et un dispositif de guidage ayant un axe de rotation perpendiculaire au plateau et agencé de manière à permettre des mouvements relatifs de rotation autour du dit axe et de translation dans le sens de l'axe entre le couteau et le plateau, caractérisé en ce que l'appareil est destiné à détacher des lamelles d'une pièce de fromage du genre "Tête de Moine", et en ce que le couteau est orienté selon un plan contenant le dit axe, et présente une arête rectiligne perpendiculaire à l'axe, des lamelles détachées par le dit mouvement relatif étant formées par râclage d'une surface de la dite pièce de fromage, et ayant la forme de copeaux.

Un autre objet de l'invention est un appareil à râcler le fromage comprenant un plateau inférieur destiné à recevoir une pièce de fromage et comportant des moyens de maintien de celle-ci, et un axe substantiellement perpendiculaire au plateau, monté de façon qu'une partie au moins de cet axe se situe au-dessus de la surface supérieure de la pièce de fromage, un couteau actionnable en rotation étant monté de façon à tourner avec l'axe ou autour de l'axe, en étant en même temps pressé vers le bas, de façon à râcler la surface supérieure du fromage, caractérisé en ce que l'axe est fixé au centre du plateau de façon à traverser la pièce de fromage posée sur le plateau, et en ce que le couteau présente une arête rectiligne, perpendiculaire à l'axe et est muni d'un manchon tournant autour de la partie supérieure de l'axe qui dépasse au-dessus de la surface supérieure de la pièce de fromage.

Une forme d'exécution avantageuse comporte une pièce en forme de potence, portant un axe que se situe entièrement au-dessus de la pièce de fromage.

Une autre forme d'exécution avantageuse comprend un axe fixé au plateau même qui porte le fromage, cet axe traversant le fromage et le couteau est mis en place sur la partie de cet axe qui dépasse au-dessus du fromage.

Les revendications dépendantes annexées se rapportent à ces deux formes d'exécution principales, et elles en définissent un certain nombre de variantes particulièrement avantageuses, à l'aide desquelles le but de l'invention est atteint d'une manière particulièrement commode, simple et économique.

Le dessin annexé illustre, à titre d'exemple, des formes d'exécution de l'objet de l'invention; dans ce dessin:

la fig. 1a est une vue en élévation d'une première variante d'une première forme d'exécution d'un appareil à râcler le fromage selon la conception proposée, cette première forme d'exécution comprenant une pièce en forme de potence dans laquelle l'axe portant le couteau-râcleur est monté, de façon à se situer entièrement au-dessus du fromage à râcler,

la fig. 1b est une vue en plan de la variante d'appareil selon la fig. 1a,

la fig. 2a est une vue en élévation d'une seconde variante de la première forme d'exécution, cette variante permettant un déplacement du bras de la potence, afin d'escamoter l'axe portant le couteau du dessus de l'endroit où se trouve le fromage, ce qui permet de disposer une cloche de protection sur celui-ci,

la fig. 2b est une vue en plan de l'appareil selon la variante de la fig. 2a,

la fig. 3 est une vue partielle en élévation correspondant en grande partie à ce que montre le haut de la fig. 2a, mais dans le cas d'une troisième variante de la première forme d'exécution, troisième variante dans laquelle une manivelle servant à faire tourner le couteau est remplacée par un moteur,

la fig. 4a est une vue en élévation d'une première variante d'une deuxième forme d'exécution, cette deuxième forme d'exécution comprenant un axe fixé au plateau destiné à supporter le fromage, cet axe traversant le fromage lorsque celui-ci est en place, et le couteau étant disposé sur la partie supérieure de cet axe, dépassant le dessus du fromage,

la fig. 4b est une vue en plan de la variante d'appareil selon la fig. 4a,

la fig. 5a est une vue en élévation d'un appareil à râcler le fromage selon une seconde variante de la seconde forme d'exécution, cette seconde variante étant munie d'un moteur pour faire tourner le couteau autour de la partie d'axe dépassant la surface supérieure du fromage, et

la fig. 5b est une vue en plan de la variante d'appareil représentée à la fig. 5a.

L'appareil selon la conception proposée permet de râcler la "Tête de Moine" posée sur un plateau, au moyen d'un couteau actionné par une manivelle ou un moteur. En tournant la manivelle ou en faisant fonctionner le moteur, on obtient un fin copeau de fromage et cela sans enlever préalablement la couenne qui l'entoure.

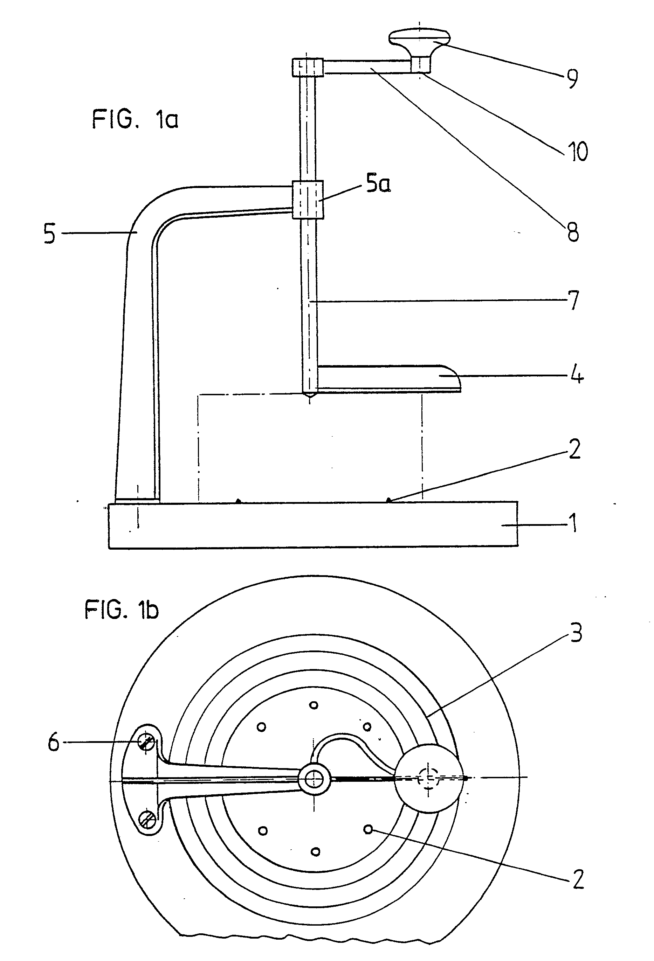

L'appareil représenté aux fig. 1a et 1b comprend un plateau en bois 1 sur lequel sont fixées une série de pointes 2, permettant d'immobiliser le fromage. Quelques cercles 3 marqués sur le bois permettent de centrer le fromage.

Une potence 5 en fonte émaillée est fixée sur la planche au moyen de deux vis à bois 6. L'extrémité de la potence comprend un alésage (5a) permettant la rotation d'un axe porte-couteau 7 portant un couteau 4. L'extrémité de l'axe porte-couteau 7 est conique; cela permet de centrer et pousser le fromage contre les pointes 2 du plateau et de l'immobiliser complètement pendant l'opération, et d'empêcher le couteau de s'enfoncer trop profondément dans le fromage.

Le couteau 4 est soudé sur l'axe 7 à environ 3 mm en dessus de la pointe, de façon à ce qu'il n'entre pas en contact avec les pointes du plateau à la fin de l'opération.

Une manivelle 8 est fixée au moyen d'une vis-pointeau à l'extrémité supérieure de l'axe 7.

Cette manivelle comprend en outre une bobine en bois 9 libre sur le pivot 10. L'axe 7, le couteau 4 et les pointes 2 sont en acier inoxydable afin qu'ils ne s'altèrent pas au contact du fromage.

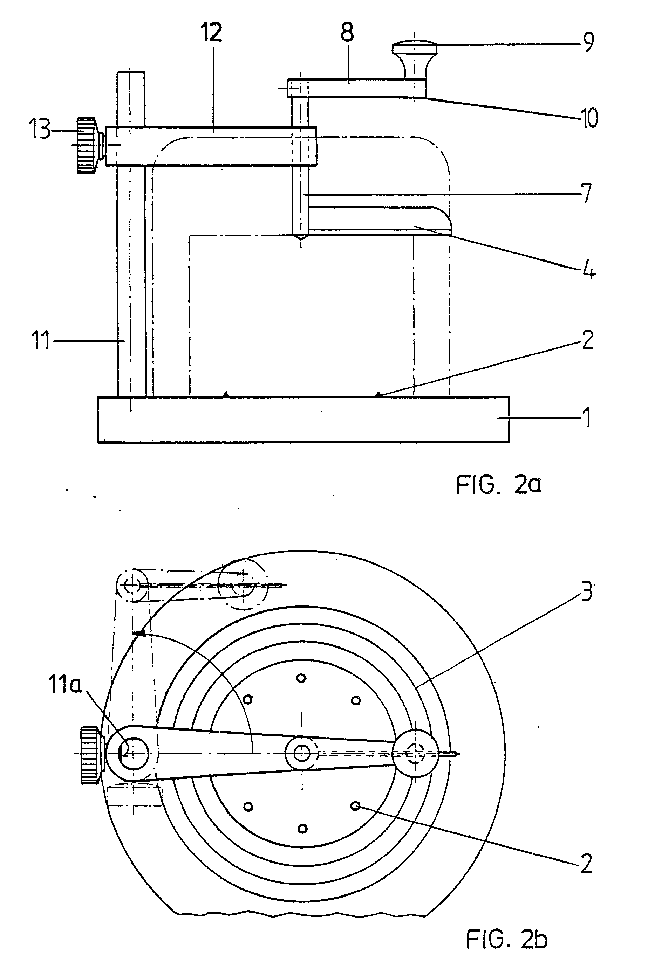

La variante de l'appareil qui est représentée aux fig. 2a et 2b, et qui constitue la seconde variante de la première forme d'exécution, comporte toutes les caractéristiques de la première variante pour ce qui concerne le fonctionnement.

Par contre, cette variante selon les fig. 2a et 2b permet d'escamoter le couteau et la manivelle, de manière à permettre à l'utilisateur de deposer une cloche sur le fromage en vue de le protéger et, d'autre part, de régler la hauteur du couteau et rendre ainsi l'appareil moins encombrant.

Les changements par rapport à la variante précédemment considérée consistent en ce que la potence est formée par une colonne 11 sur laquelle est fixé un bras 12 réglable en hauteur et qui se positionne au moyen d'un bouton moleté 13 le long d'un plat 11a de la colonne. Cela permet, d'une part, d'escamoter le bras 12 porte-couteau autour de la colonne et, d'autre part, de régler la hauteur du couteau. Cette variante présente l'avantage de diminuer la longueur de l'axe porte-couteau et de permettre la mise en place de la cloche.

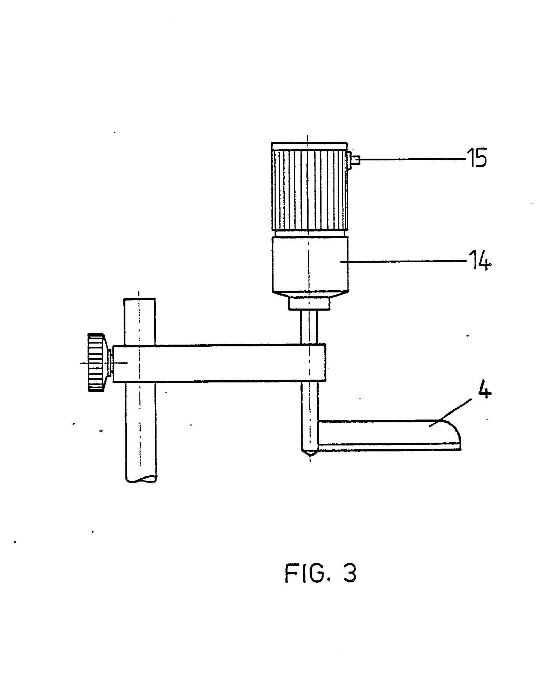

La variante représentée à la fig. 3, qui constitue la troisième variante de la première forme d'exécution comporte toutes les particularités susmentionnées de la seconde variante, à la différence près que la manivelle est remplacée par un motor-réducteur 14 à pile ou secteur monté directement au bout de l'axe porte-couteau 7.

En tenant le moteur dans la main, on peut l'actionner à volonté par simple pression sur un bouton 15 et pousser l'axe porte-couteau sur le fromage.

Il est bien entendu que, dans les différentes variantes de cette première forme d'exécution, de même que dans les différentes variantes d'une seconde forme d'exécution quel'on va encore décrire, le couteau peut être constitué de toute façon adéquate, il est de préférence en métal mais pourrait éventuellement être fait d'une autre matière suffisamment dure. Par ailleurs, le couteau ne doit pas obligatoirement s'étendre seulement dans une direction à partir de l'axe, mais pourrait fort bien s'étendre diamétralement, voire "en étoile", à trois directions, ou même plus de trois directions. La dénomination de "couteau", concerne la partie qui agit directement sur la surface supérieure du fromage pour la râcler, indépendamment des diverses formes que l'on peut lui donner.

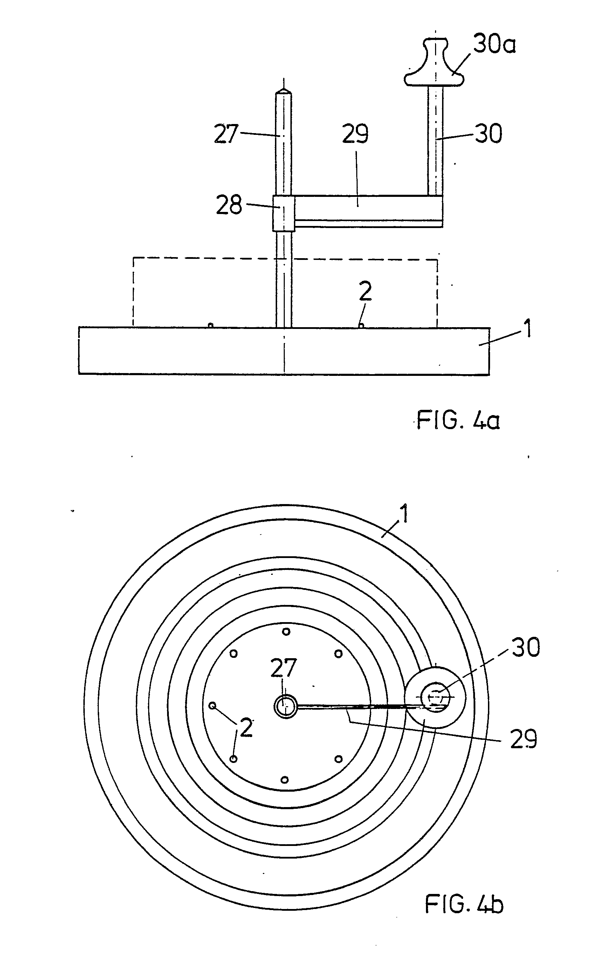

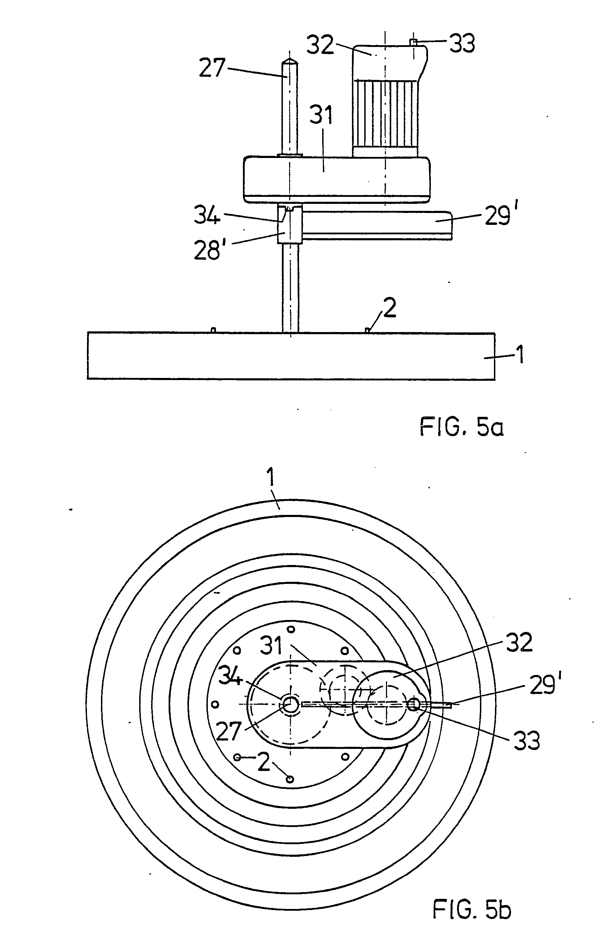

Les trois variantes qui viennent d'être décrites sont celles d'une première forme d'exécution dans laquelle l'axe 7 est monté en un endroit situé au-dessus du fromage et reste au-dessus de celui-ci. On va décrire maintenant une seconde forme d'exécution, comprenant également deux variantes, en liaison avec les fig. 4a, 4b et 5a, 5b.

Dans cette forme d'exécution, l'axe 27 est fixé au plateau inférieur supportant le fromage, ce dernier étant, pour être mis en place, embroché sur l'axe 27 qui le maintient ainsi solidement, en coopération avec les pointes 2 qui l'empêchent de tourner. Le couteau 29 (première variante de la deuxième forme d'exécution, fig. 4a, 4b) ou 29' (deuxième variante de la deuxième forme d'exécution, fig. 5a, 5b) est fixé radialement à l'extérieur d'un manchon 28, 28', qui tourne autour de l'axe 27. Pour utiliser l'appareil, il faut impartir au couteau 29, 29', à la fois un mouvement rotatif et une certaine pression vers le bas, comme cela a été indiqué pour les variantes de la première forme d'exécution.

La première variante de la deuxième forme d'exécution, montrée aux fig. 4a, 4b prévoit simplement une tige 30 en forme de manivelle avec une poignee 30a pour mouvoir le couteau 29.

La deuxième variante de la deuxième forme d'exécution, représentée aux fig. 5a, 5b, comprend un dispositif à moteur formé d'un petit moteur 32 actionnant un réducteur à engrenage 31. Ce réducteur actionne à vitesse lente un manchon d'entraînement 34 engagé par doigts de crochement avec le manchon 28' qui porte le couteau 29'. Un bouton-poussoir 33 permet de mettre en marche et d'arrêter le moteur 32, ce dernier peut être du type à pile, utilisé notamment pour faire tourner les broches de gril, il peut également être d'un autre type. En principe, la position angulaire du moteur 33 autour de l'axe 27 est déterminée par la main de l'opérateur, il serait également possible, d'une manière non représentée au dessin, de prévoir des moyens de fixation du boîtier du réducteur 31 à l'axe fixe 27.

Dans les deux variantes de la seconde forme d'exécution fig. 4a, 4b, 5a, 5b, la pression de haut en bas pour râcler le dessus du fromage est, comme dans le cas des variantes de la première forme d'exécution, exercée à la main par l'opérateur.

La seconde forme d'exécution selon les fig. 4a, 4b et 5a, 5b présente l'avantage d'être très simple et d'assurer une fixation du fromage particulièrement bonne pour le fonctionnement.

On note encore que le plateau inférieur 1 peut être en bois ou en une autre matière, notamment en matière plastique, de même les autres pièces du dispositif pourraient être en matière plastique au lieu d'être en métal.

On note encore que le manchon 28, 28' de la deuxième forme d'exécution s'étend vers le bas légèrement plus loin que la ou les tranches du couteau 29, 29', de façon que ce manchon bute contre le plateau inférieur 1 en maintenant la ou les tranches du couteau 29, 29' au-dessus des pointes 2. Ainsi, aucun "accroc" n'est à craindre au moment où le couteau atteint le bas de la pièce de fromage.

L'appareil selon l'invention permet de râcler la pièce de fromage complètement, jusqu'à sa couenne inférieure, et ceci d'une façon particulièrement commode.

On note encore que l'appareil à râcler le fromage selon l'invention peut servir à râcler tout genre de fromage se prêtant à être râclé en vue d'être consommé ou utilisé à des fins culinaires. Selon les dimensions typiques du fromage râclé à l'aide de l'appareil, le plateau et le couteau auront des dimensions différentes, appropriées.

On note de plus que le moteur pourrait également d'une façon avantageuse être disposé dans le plateau inférieur, le mouvement de rotation étant alors transmis par l'axe 27 lui-même ou par une broche distincte tournant à l'intérieur de celui-ci.

## Revendications

1. Appareil pour détacher des lamelles d'une pièce de denrée alimentaire, comprenant un plateau de support (1) pour la dite pièce, un couteau (4; 29) et un dispositif de guidage (5a, 7; 27, 28) ayant un axe de rotation perpendiculaire au plateau et agencé de manière à permettre des mouvements relatifs de rotation autour du dit axe et de translation dans le sens de l'axe entre le couteau et le plateau, caractérisé en ce que l'appareil est destiné à détacher des lamelles d'une pièce de fromage du genre "Tête de Moine", et en ce que le couteau (4; 29) est orienté selon un plan contenant le dit axe, et présente une arête rectiligne perpendiculaire à l'axe, les lamelles détachées par le dit mouvement relatif étant formées par râclage d'une surface de la dite pièce de fromage, et ayant la forme de copeaux.

2. Appareil selon la revendication 1, caractérisé en ce que le dispositif de guidage est constitué de deux éléments formés par un arbre cylindrique rectiligne (7; 27) et un manchon tubulaire (5a; 28) ajusté au dit arbre, l'un des dits éléments étant rigidement relié au plateau (1) et l'autre au couteau (4; 29).

3. Appareil selon la revendication 2, caractérisé en ce que les deux surfaces ajustées l'une à l'autre des dits éléments sont des surfaces cylindriques lisses permettant une rotation et un coulissement axial relatifs.

4. Appareil selon la revendication 2, caractérisé en ce que le plateau (1) présente une forme circulaire et est muni de pointes (2) réparties autour de son centre, capables de solidariser la dite pièce de fromage avec le plateau, le dispositif de guidage étant agencé de manière que le dit axe de rotation coïncide avec l'axe du plateau.

5. Appareil selon la revendication 4, caractérisé en ce que le dispositif de guidage comporte des moyens de liaison rigides en forme de potence (5) entre le plateau (1) et le dit manchon (5a), le dit arbre (7) étant solidaire, à une extrémité, du couteau (4), et à l'autre d'un bras de manivelle (8).

6. Appareil selon la revendication 5, caractérisé en ce que les dits moyens de liaison en forme de potence comprennent une colonne (11, fig. 2a) solidaire du plateau (1) parallèle au dit axe et un bras (12) coulissant sur la colonne, présentant le dit manchon à son extrémité libre et blocable sur la colonne au moyen d'un boulon moleté (13).

7. Appareil selon la revendication 6, caractérisé en ce que la colonne présente un méplat (11a) orientant le bras vers le centre du plateau.

8. Appareil selon la revendication 2, caractérisé en ce que celui des dits éléments du dispositif de guidage qui est solidaire du couteau (4; 29) s'étend au-delà de la dite arête du couteau dans le sens du dit axe et en direction du plateau (1), de manière à former une saillie qui pénètre dans la dite surface de la pièce de denrée alimentaire, pendant le râclage.

9. Appareil selon la revendication 1, caractérisé en ce que le plateau est en bois et en ce que le couteau et le dispositif de guidage sont en métal.

10. Appareil selon la revendication 1, caractérisé en ce que le plateau et au moins une partie des éléments du dispositif de guidage sont en matière plastique.

11. Appareil à râcler le fromage, comprenant un plateau inférieur (1) destiné à recevoir une pièce de fromage et comportant des moyens de maintien (2) de celle-ci, et un axe (27) substantiellement perpendiculaire au plateau, monté de façon qu'une partie au moins de cet axe se situe au-dessus de la surface supérieure de la pièce de fromage, un couteau (29) actionnable en rotation étant monté de façon à tourner avec l'axe ou autour de l'axe, en étant en même temps pressé vers le bas, de façon à râcler la surface supérieure du fromage, caractérisé en ce que l'axe est fixé au centre du plateau (1) de façon à traverser la pièce de fromage posée sur le plateau, et en ce que le couteau (29) présente une arête rectiligne, perpendiculaire à l'axe et est muni d'un manchon (28) tournant autour de la partie supérieure de l'axe qui dépasse au-dessus de la surface supérieure de la pièce de fromage.

12. Appareil à râcler le fromage selon la revendication 11, caractérisé en ce que les moyens de maintien en place du fromage sont constitués par de petites pointes (2) fixées dans le plateau (1) et émergeant de la surface supérieure de celui-ci de façon à entrer dans la partie inférieure de la pièce de fromage.

13. Appareil à râcler le fromage selon la revendication 12, caractérisé en ce que le manchon (28) s'étend légèrement en-dessous de l'arête de râclage du couteau, (29) de façon à former une butée empêchant un heurt entre le couteau et les pointes de fixation, lorsque le fromage est râclé entièrement jusqu'à sa partie inférieure.

14. Appareil à râcler le fromage selon l'une des revendications 12 à 13, caractérisé en ce que plusieurs cercles concentriques (3) sont dessinés sur le plateau pour favoriser l'engagement du fromage sur l'axe fixé au centre du plateau de façon que le fromage vienne s'appuyer sur le plateau concentriquement à celui-ci.

15. Appareil à râcler le fromage selon l'une des revendications 11 à 14, caractérisé en ce que ledit plateau (1) est en bois.

16. Appareil à râcler le fromage selon l'une des revendications 11 à 15, caractérisé en ce que ledit couteau est entraîné par un moteur (32) électrique.

17. Appareil à râcler le fromage selon la revendication 16, caractérisé en ce que ledit moteur (32) entraîne le couteau (29') par l'intermédiaire d'un réducteur (31), l'ensemble du moteur et du réducteur étant monté sur la partie dudit axe (27) se situant au-dessus de la surface supérieure de la pièce de fromage, et des moyens d'accouplement (34) étant établis pour accoupler le mobile de sortie du réducteur au couteau pour faire tourner celui-ci autour dudit axe, l'ensemble du moteur et du réducteur se déplaçant en hauteur avec le couteau pour assurer l'opération de râclage de la surface supérieure du fromage.

18. Appareil à râcler le fromage selon la revendication 16, caractérisé en ce que ledit moteur, muni de moyens qui font tourner un arbre de sortie à la vitesse voulue, relativement lente, est logé dans ledit plateau inférieur, ledit axe, fixé au plateau étant creux de façon qu'un arbre mû par le moteur le traverse, des moyens étant prévus pour lier cet arbre tournant au couteau, au-dessus de la surface supérieure du fromage, pour entraîner ce couteau en rotation alors que sa position en hauteur peut être commandée manuellement.

19. Appareil à râcler le fromage selon l'une des revendications 11 à 15, caractérisé en ce que ledit couteau (28), pour être mû en rotation et simultanément pressé vers le bas, est muni d'une poignée (30a) avec laquelle il forme un dispositif du type manivelle tournant autour de l'axe.

## Patentansprüche

1. Einrichtung zum Abtrennen von Lamellen eines Nahrungsmittelstückes mit einer Stützplatte (1) für das genannte Stück, einem Messer (4; 29) und einer Führungsvorrichtung (5a, 7; 27, 28) mit einer Rotationsachse, die senkrecht zur Platte und derart angeordnet ist, dass relative Rotationsbewegungen um die Achse und Translationsbewegungen in der Richtung der Achse zwischen dem Messer und der Platte ausgeführt werden können, dadurch gekennzeichnet, dass die Einrichtung dazu bestimmt ist, von einem Stück Käse des Typs "Tête de Moine" Lamellen abzutrennen und dass das Messer (4; 29) in einer Ebene angeordnet ist, welche die genannte Achse enthält und eine geradlinige Kante senkrecht zur Achse aufweist und die abgetrennten Lamellen durch die Relativbewegung durch Schaben einer Oberfläche des genannten Käsestückes gebildet werden und spanförmig ausgebildet sind.

2. Einrichtung nach Patentanspruch 1, dadurch gekennzeichnet, dass die Führungsvorrichtung zwei Elemente umfasst, die durch eine zylindrische geradlinige Achse (7; 27) und eine röhrenförmige Hülse (5a; 28) die an der Achse ausgerichtet ist, gebildet werden, wobei eines der genannten Elemente mit der Platte (1) und das andere mit dem Messer (4; 29) starr verbunden ist.

3. Einrichtung nach Patentanspruch 2, dadurch gekennzeichnet, dass die zwei aufeinander ausgerichteten Oberflächen der beiden Elemente glatte zylindrische Oberflächen sind, die eine Rotation und eine relative achsiale Gleitführung ermöglichen.

4. Einrichtung nach Patentanspruch 2, dadurch gekennzeichnet, dass die Platte (1) eine kreisförmige Form aufweist und mit Spitzen (2) versehen ist, die um ihr Zentrum verteilt sind und geeignet sind, das genannte Stück Käse auf der Platte festzuhalten und die Führungsvorrichtung derart angeordnet ist, dass die Rotationsachse mit der Plattenachse zusammenfällt.

5. Einrichtung nach Patentanspruch 4, dadurch gekennzeichnet, dass die Führungsvorrichtung Mittel zur festen Verbindung in Form eines einarmigen Auslegers (5) zwischen der Platte (1) und der genannten Hülse (5a) umfasst, wobei die Achse (7) an einem Ende mit dem Messer (4) und am andern Ende mit einem Kurbelarm (8) formschlüssig verbunden ist.

6. Einrichtung nach Patentanspruch 5, dadurch gekennzeichnet, dass die Verbindungsmittel in Form des einarmigen Auslegers einen Ständer (11; Fig. 2a), der mit der Platte (1) formschlüssig verbunden und parallel zur genannten Achse angeordnet ist und weiter einen zuf dem Ständer gleitbaren Arm (12) umfassen, wobei die genannte Hülse an seinem freien Ende vorgesehen ist und der Arm am Ständer mit Hilfe einer gerändelten Schraube (13) arretierbar ist.

7. Einrichtung nach Patentanspruch 6, dadurch gekennzeichnet, dass der Ständer eine Abflachung (11a) zum Ausrichten des Armes in Richtung der Plattenmitte aufweist.

8. Einrichtung nach Patentanspruch 2, dadurch gekennzeichnet, dass dasjenige der genannten Elemente der Führungsvorrichtung, welches formschlüssig mit dem Messer verbunden (4; 29) ist, sich über die genannte Kante des Messers in Richtung der genannten Achse und in Richtung der Platte (1) erstreckt, derart, dass ein Ansatz gebildet wird, der in die genannte Oberfläche des Nahrungsmittelstückes während dem Schaben eindringt.

9. Einrichtung nach Patentanspruch 1, dadurch gekennzeichnet, dass die Platte aus Holz und das Messer und die Führungsvorrichtung aus Metall bestehen.

10. Einrichtung nach Patentanspruch 1, dadurch gekennzeichnet, dass die Platte und mindestens ein Teil der Elemente der Führungsvorrichtung aus Kunststoff bestehen.

11. Einrichtung zum Schaben von Käse mit einer zur Aufnahme eines Käsestückes bestimmten unteren Platte (1), Festhaltemitteln (2) und einer Achse (27), die im wesentlichen senkrecht zur Platte verläuft und derart angeordnet ist, dass mindestens ein Teil der Achse sich überhalb der oberen Oberfläche des Käsestückes befindet, einem Messer (29), das in Rotation versetzbar und derart befestigt ist, dass es mit der Achse oder um die Achse drehbar ist und gleichzeitig nach unten gedrückt wird, um die obere Oberfläche des Käses zu schaben, dadurch gekennzeichnet, dass die Achse im Zentrum der Platte (1) derart befestigt ist, um das auf der Platte befindliche Käsestück zu durchdringen und dass das Messer (29) eine geradlinige Kante aufweist, die rechtwinklig zur Achse angeordnet und mit einer Hülse (28) versehen ist, die um den oberen Teil der Achse dreht, die über die obere Oberfläche des Käsestückes absteht.

12. Einrichtung zum Schaben von Käse nach Patentanspruch 11, dadurch gekennzeichnet, dass die Mittel zum Festhalten des Käses aus kleinen Spitzen (2) bestehen, die in der Platte (1) befestigt und von der oberen Oberfläche derselben derart abstehen, dass sie in den unteren Teil des Käsestückes eindringen.

13. Einrichtung zum Schaben von Käse nach Patentanspruch 12, dadurch gekennzeichnet, dass die Hülse (28) sich leicht unterhalb der Schabkante des Messers (29) erstreckt, um einen Anschlag zu bilden, der ein Aufprallen des Messers auf die Festhaltespitzen vermeidet, währenddem der Käse ganz bis an seinen unteren Teil geschabt wird.

14. Einrichtung zum Schaben von Käse nach einem der Ansprüche 12 bis 13, dadurch gekennzeichnet, dass mehrere konzentrische Kreise (3) auf der Platte eingezeichnet sind, um das Festhalten des Käses auf der im Zentrum der Platte befestigten Achse zu erleichtern, derart, dass der Käse auf der Platte konzentrisch zu derselben abgestützt wird.

15. Einrichtung zum Schaben von Käse nach einem der Ansprüche 11 bis 14, dadurch gekennzeichnet, dass die Platte (1) aus Holz besteht.

16. Einrichtung zum Schaben von Käse nach einem der Ansprüche 11 bis 15, dadurch gekennzeichnet, dass das genannte Messer durch einer Elektromotor (32) angetrieben wird.

17. Einrichtung zum Schaben von Käse nach Patentanspruch 16, dadurch gekennzeichnet, dass der genannte Motor (32) das Messer (29) mittels einem Uebersetzungsgetriebe (31) antreibt, wobei der Motor und das Uebersetzungsgetriebe an demjenigen Teil der Achse (27) befestigt sind, die sich über der oberen Oberfläche des Käsestückes befindet und Kupplungsmittel (34) vorgesehen sind, um den drehbaren Ausgangsteil des Uebersetzungsgetriebes mit dem Messer zu kuppeln, um dasselbe um die genannte Achse zu drehen, wobei der Motor und das Uebersetzungsgetriebe in der Höhe mit dem Messer verstellbar sind, um das Abschaben der oberen Oberfläche des Käses zu gewährleisten.

18. Einrichtung zum Schaben von Käse nach Patentanspruch 16, dadurch gekennzeichnet, dass der genannte Motor, der mit Mitteln versehen ist, die eine Ausgangsachse mit einer gewünschten Umdrehzahl relativ langsam rotieren lassen, in die untere Platte eingesetzt ist, wobei die genannte in der Platte befestigte Achse der gestalt hohl ist, dass eine vom Motor bewegte Achse dieselbe durchdringt und Mittel vorgesehen sind, um die drehende Achse mit dem Messer überhalb der oberen Oberfläche des Käses zu verbinden, um das Messer drehend anzutreiben, wobei seine Lage in der Höhe von Hand verstellt werden kann.

19. Einrichtung zum Schaben von Käse nach einem der Ansprüche 11 bis 15, dadurch gekennzeichnet, dass das genannte Messer (29) um in Rotation versetzt und gleichzeitig nach unten gedrückt zu werden, mit einem Handgriff (30a) versehen ist, mit welchem es einen Kurbelarm bildet, der um die Achse drehbar ist.

**Claims**

1. Apparatus for detaching thin strips from a piece of a foodstuff, comprising a support plate (1) for the said piece, a knife (4; 29), and a guide device (5a; 7; 27, 28) having an axis of rotation perpendicular to the plate and arranged so as to permit relative movements between the knife and the plate of rotation about the said axis and of translation parallel to the axis, characterized in that the apparatus is intended to detach thin strips from a piece of cheese of the "Tête de Moine" type, and in that the knife (4; 29) is oriented along a plane containing the said axis and includes a straight edge perpendicular to the axis, the thin strips detached by the said relative movement being formed by scraping a surface of the said piece of cheese and having the shape of shavings.

2. Apparatus according to claim 1, characterized in that the guide device is composed of two elements formed by a straight cylindrical shaft (7; 27) and a tubular bush (5a; 28) fitted to the said shaft, one of the said elements being rigidly joined to the plate (1) and the other to the knife (4; 29).

3. Apparatus according to claim 2, characterized in that the two surfaces fitted to one another of the said elements are smooth cylindrical surfaces permitting a relative rotation and axial sliding.

4. Apparatus according to claim 2, characterized in that the plate (1) has a circular shape and is provided with points (2) distributed about its centre, capable of making the said piece of cheese integral with the plate, the guide device being arranged in such a way that the said axis of rotation coincides with the axis of the plate.

5. Apparatus according to claim 4, characterized in that the guide device comprises rigid, L-shaped connection means (5) between the plate (1) and the said bush (5a), the said shaft (7) being integral with the knife (4) at one end and with a crank-arm (8) at the other.

6. Apparatus according to claim 5, characterized in that the said L-shaped connection means comprise a column (11, Fig. 2a) integral with the plate (1) and parallel to the said axis and an arm (12) sliding on the column, having the said bush at its free end and lockable on the column by means of a knurled bolt (13).

7. Apparatus according to claim 6, characterized in that the column has a flat (11a) orienting the arm towards the centre of the plate.

8. Apparatus according to claim 2, characterized in that the one of the said elements of the guide device which is integral with the knife (4; 29) extends beyond the said edge of the knife along the said axis and towards the plate (1) so as to form a projection which penetrates into the said surface of the piece of foodstuff during the scraping.

9. Apparatus according to claim 1, characterized in that the plate is of wood, and in that the knife and the guide device are of metal.

10. Apparatus according to claim 1, characterized in that the plate and at least some of the elements of the guide device are of plastics.

11. Apparatus for scraping cheese, comprising a bottom plate (1) intended to receive a piece of cheese and including holding means (2) for the latter, and a spindle (27) substantially perpendicular to the plate, mounted in such a way that at least part of this spindle is situated above the top surface of the piece of cheese, a rotatable knife (29) being mounted so as to rotate with the spindle or about the spindle, being at the same time pressed downwards, so as to scrape the top surface of the cheese, characterized in that the spindle is fixed to the centre of the plate (1) so as to pass through the piece of cheese placed on the plate, and in that the knife (29) includes a straight edge perpendicular to the spindle and is provided with a bush (28) rotating about the upper part of the spindle which protrudes above the top surface of the piece of cheese.

12. Apparatus for scraping cheese according to claim 11, characterized in that the means for holding the cheese in place consist of small points (2) fixed in the plate (1) and emerging from the top surface thereof so as to enter into the bottom part of the piece of cheese.

13. Apparatus for scraping cheese according to claim 12, characterized in that the bush (28) extends slightly below the scraping edge of the knife (29) so as to form a stop preventing the knife from striking the fixing points when the cheese is scraped completely down to the bottom thereof.

14. Apparatus for scraping cheese according to one of the claims 12 to 13, characterized in that several concentric circles (3) are drawn on the plate for facilitating the fitting of the cheese on the spindle fixed at the centre of the plate so that the cheese comes to rest against the plate concentrically therewith.

15. Apparatus for scraping cheese according to one of the claims 11 to 14, characterized in that said plate (1) is of wood.

16. Apparatus for scraping cheese according to one of the claims 11 to 15, characterized in that said knife is driven by an electric motor (32).

17. Apparatus for scraping cheese according to claim 16, characterized in that said motor (32) drives the knife (29') via a reducer (31), the motor and the reducer as a whole being mounted on the part of said spindle (27) situated above the top surface of the piece of cheese, and coupling means (34) being incorporated for coupling the output gear of the reducer to the knife for causing the latter to rotate about said spindle, the motor and the reducer as a whole being displaced in height with the knife for carrying out the scraping of the top surface of the cheese.

18. Apparatus for scraping cheese according to claim 16, characterized in that said motor, provided with means which cause an output shaft to rotate at the relatively slow speed required, is seated in said bottom plate, said spindle fixed to the plate being hollow so that a shaft driven by the motor passes through it, means being provided for connecting this rotating shaft to the knife, above the top surface of the cheese, for driving this knife rotatingly while its position in height can be controlled manually.

19. Apparatus for scraping cheese according to one of the claims 11 to 15, characterized in that said knife (29), for being driven rotatingly and simultaneously pressed downwards, is provided with a handle (30a) with which it forms a crank-type device rotating about the spindle.

FIG. 1a

5a

5

9

10

8

7

4

2

1

FIG. 1b

3

6

2

2

12    8    9

13    10

7

11    4

2

1

FIG. 2a

3

11a

2

FIG. 2b

FIG. 3

FIG. 4a

FIG. 4b

FIG. 5a

FIG. 5b